# EUROPEAN PATENT APPLICATION

(11) **EP 3 352 115 A1**
(43) Date of publication of application: **25.07.2018**
(21) Application number: 18150836.7
(22) Date of filing: 09.01.2018
(51) Int. Cl.: G06Q 10/02, G06Q 50/30, G05D 1/02

(54) **AUTOMATED VEHICLE TRANSPORTATION SYSTEM FOR MULTIPLE-SEGMENT GROUND-TRANSPORTATION**

(30) Priority: 23.01.2017 US 201715412295
(71) Applicant: Delphi Technologies LLC, Troy, MI 48007 (US)
(72) Inventor: BEDEGI, Peter A., SAN MATEO, CALIFORNIA 94403 (US); LAUR, Michael H., Mission Viejo, California 92692 (US); MANGAL, Nandita, Palo Alto, California 94301 (US)
(74) Representative: Robert, Vincent

(57) **Abstract**

An automated vehicle transportation system (10) for multiple-segment ground-transportation includes a communications-network (12), a first-automated-taxi (40), and a second-automated-taxi (44). The communications-network (12) is used to send a transportation-request (16) from a client (18) to an automated-taxi-fleet (20). The transportation-request (16) includes a destination (24). The first-automated-taxi (40) transports the client (18) along a first-segment (42) of a route (32) toward the destination (24). The second-automated-taxi (44) transports the client (18) along a second-segment (46) of the route (32) to the destination (24). The first-segment (42) ends and the second-segment (46) begins at a transfer-point (48). The system (10) coordinates a first-meet-time (50) of the first-automated-taxi (40) and a second-meet-time (54) of the second-automated-taxi (44) at the transfer-point (48).

## Description

### TECHNICAL FIELD OF INVENTION

This disclosure generally relates to an automated vehicle transportation system, and more particularly relates to a system for multiple-segment ground-transportation that coordinates the transportation of a client when multiple instances of automated-taxis are needed to deliver a client to a destination.

### BACKGROUND OF INVENTION

Fully-automated (i.e. driverless) taxis have been proposed. Typically, these automated-taxis operate in urban-environments where the travel distances are relatively short, and the travel-conditions (e.g. terrain, road-type) are relatively consistent. However, as more people cease to own their own vehicles and rely on automated-taxi fleets for their ground-transportation needs, the range and travel-condition capability of the presently envisioned automated-taxis may not be adequate for the transportation needs of some clients.

### SUMMARY OF THE INVENTION

In accordance with one embodiment, an automated vehicle transportation system for multiple-segment ground-transportation is provided. The system includes a communications-network, a first-automated-taxi, and a second-automated-taxi. The communications-network is used to send a transportation-request from a client to an automated-taxi-fleet. The transportation-request includes a destination. The first-automated-taxi transports the client along a first-segment of a route toward the destination. The second-automated-taxi transports the client along a second-segment of the route to the destination. The first-segment ends and the second-segment begins at a transfer-point. The system coordinates a first-meet-time of the first-automated-taxi and a second-meet-time of the second-automated-taxi at the transfer-point.

The route to the destination may be characterized by a distance, and the distance may be greater than a range of the first-automated-taxi. The second-segment may include a terrain-type that the first-automated-taxi is not able to traverse. The first-meet-time of the first-automated-taxi and the second-meet-time of the second-automated-taxi may differ by less than a minute. The system may adjust a pickup-time that the first-automated-taxi starts the first-segment so first-meet-time is different from the second-meet-time by less than a minute.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of an automated vehicle transportation system in accordance with one embodiment; and
Fig. 2 is map of a travel-route of a client transported by the system of Fig. 1 in accordance with one embodiment.

### DETAILED DESCRIPTION

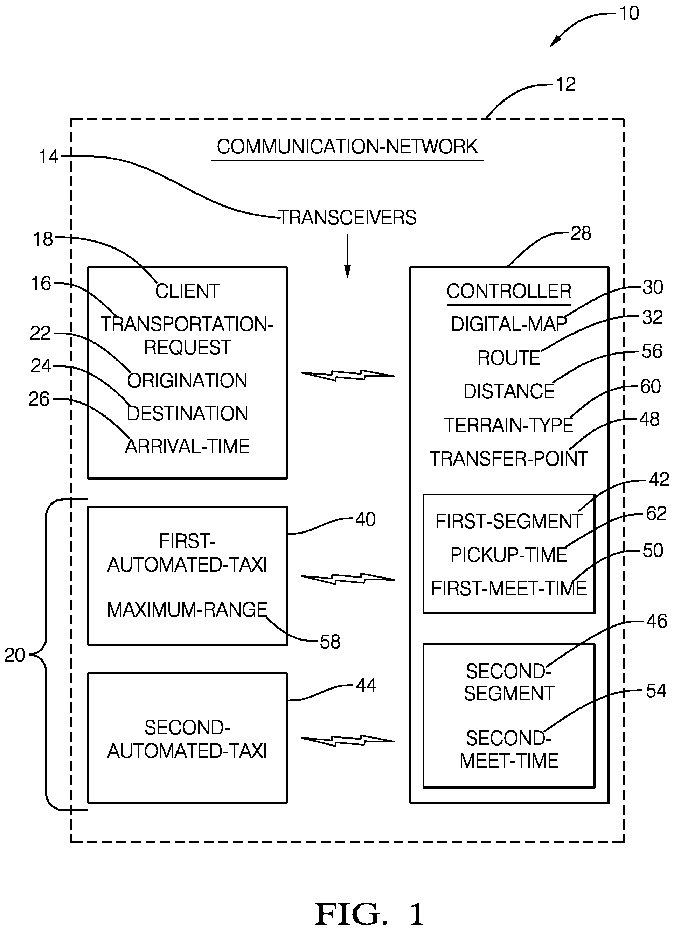

Fig. 1 illustrates a non-limiting example of an automated vehicle transportation system 10, hereafter referred to as the system 10. The system 10 described herein is an improvement over known systems as the system 10 provides for multiple-segment ground-transportation that overcomes the distance, terrain, and other limitations of proposed and in-use instances or fleets of fully-automated-taxis, i.e. driverless taxis. The limitations of the know examples of fully automated-taxis include, but are not limited to, range limitations due to electric-only operation, terrain-limitations due to low ground-clearance and two-wheel drive propulsion, and government restrictions for various reasons.

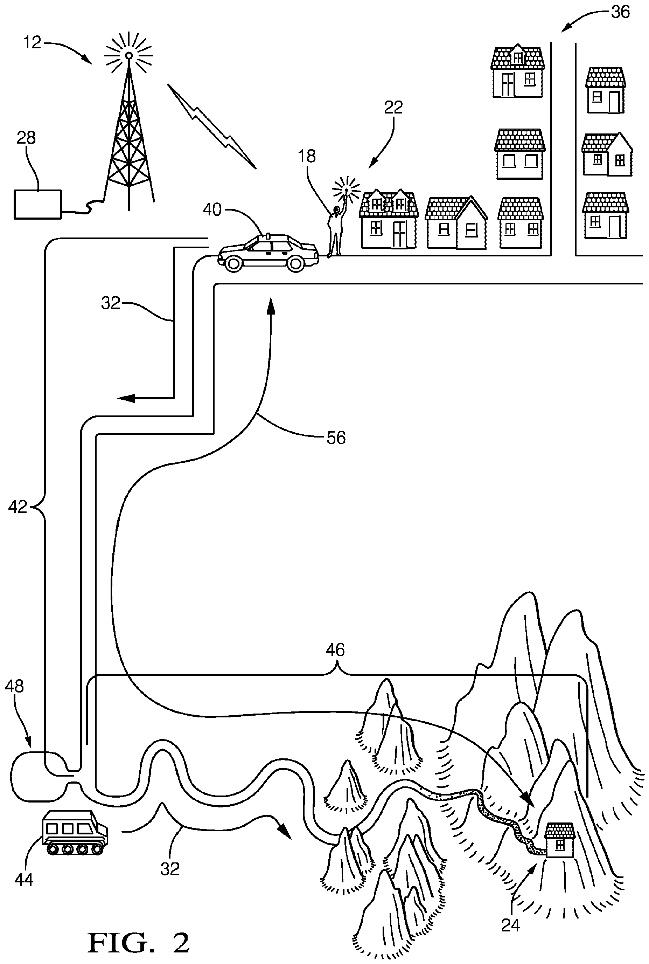

The system 10 includes a communications-network 12 that may be enabled by a plurality of transceivers 14 that operate using a variety of protocols such as, but not limited to, cellular-phone-communications, Wi-Fi-communications, satellite-communications, private-radio-communications, wired-computer-communications, or any combination thereof, as will be recognized by those in the art. In general, the communications-network 12 is used to send a transportation-request 16 from a client 18 (i.e. a person in need of transportation) to an automated-taxi-fleet 20. While, the automated-taxi-fleet 20 is illustrated as having only two taxis, it is contemplated that a typical fleet will have many more instances of automated taxis serving the transportation needs of many individual clients. Two taxis are show in Fig. 1 (and Fig. 2) only to simplify the illustration and explanation.

The transportation-request 16 from the client 18 may include an origination 22 (a location where the client 18 wishes to be picked up), a destination 24 (the location where the client 18 wants to travel), and an arrival-time 26 (the date and time-of-day that the client 18 wants to arrive at the destination 24). The destination 24 may be communicated to a controller 28 that is part of the system 10. The controller 28 may include a processor (not specifically shown) such as a microprocessor or other control circuitry such as analog and/or digital control circuitry including an application specific integrated circuit (ASIC) for processing data as should be evident to those in the art. The controller 28 may include memory (not specifically shown), including nonvolatile memory, such as electrically erasable programmable read-only memory (EEPROM) for storing one or more routines, thresholds, and captured data. The one or more routines may be executed by the processor to coordinate the operation of the automated-taxi-fleet 20 as described herein.

Based on information provided to the controller 28 by the transportation-request 16, the controller 28 may consult or analyze a digital-map 30 to determine a route 32 from the origination 22 to the destination 24. The system 10, or more specifically the controller 28, determines if/when an automated-taxi from the automated-taxi-fleet 20 is available, and determines if the automated-taxi selected is capable to transport the client 18 to the destination 24. In some instances, for one or more reasons that will be described in more detail below, the automated-taxi selected is not capable to transport the client 18 for the entirety of the route 32. In this case, arrangements are made by the system 10 to transfer the client 18 to another automated-taxi at a transfer-point 48 in order to successfully transport the client 18 to the destination 24.

Fig. 2 illustrates a non-limiting example of a travel-scenario 36 where the client 18 is to be transported from the origination 22 (e.g. a city) to the destination (e.g. a mountain cabin) along the route 32 indicated, which was determined by the controller 28. The system 10, or more specifically the controller 28, may select a first-automated-taxi 40 to pickup the client at the origination 22. Some of the vehicles that have been proposed for use as an automated-taxi (i.e. driverless-taxi) within a city are relatively small, battery-powered types of vehicles that, for example, have limited range due to the electric-only propulsion means, and/or are unsuitable or have limited capability for rugged-terrain or off-road operation.

If the system 10 determines that the first-automated-taxi 40 is not capable to travel a portion of the route 32, the first-automated-taxi 40 may be used to transport the client 18 only along a first-segment 42 of the route 32 toward the destination 24, and automatically make arrangements for a second-automated-taxi 44 that transports the client 18 along a second-segment 46 of the route 32 to the destination 24. It is noted that the client 18 will not need to make any particular arrangements or consult schedules to arrange the sequential and timely transportation by the first-automated-taxi 40 and the second-automated-taxi 44. Rather, the system 10 will coordinate the availability and positioning of the first-automated-taxi 40 and the second-automated-taxi 44 so the client 18 can avoid the frustration of making complicated ground-transportation arrangements.

In order for the client 18 to be conveniently transferred from the first-automated-taxi 40 to the second-automated-taxi 44, the first-segment 42 ends and the second-segment 46 begins or starts at a transfer-point 48. The system 10 coordinates a first-meet-time 50 of the first-automated-taxi 40 and a second-meet-time 54 of the second-automated-taxi 44 at the transfer-point 48 so the client 18 does not need to unnecessarily wait to continue traveling to the destination 24. The transfer-point 48 may be a parking-lot or rest-area along the route, or any location where the client 18 may be safely transferred from the first-automated-taxi 40 to the second-automated-taxi 44.

As suggested above, there may be one or multiple reasons why the first-automated-taxi 40 is unable or is unsuitable to by itself transport the client to the destination 24. By way of example and not limitation, the route 32 to the destination 24 from the origination 22 may be characterized by a distance 56, and the distance 56 may be greater than a maximum-range 58 of the first-automated-taxi 40. The transfer-point 48 may be selected so that the first-automated-taxi 40 is able to return to the city at or near the origination 22, or because the transfer-point 48 has charging facilities so the first-automated-taxi 40 can recharge before returning to the city. Since it is expected that charging of the first-automated-taxi 40 will take longer than the client 18 is willing to wait, the client 18 is transferred to the second-automated-taxi 44 so the trip to the destination can continue as quickly as possible.

By way of another example, the second-segment 46 of the route 32 may include a terrain-type 60 (Fig. 1) that the first-automated-taxi 40 is not able to traverse. For example, the second-segment 46 may include, but is not limited to, snow-covered roads, steep-inclines, and-or water-crossings that the first-automated-taxi is not designed to navigate. The second-automated-taxi 44 may be equipped with four-wheel-drive or tracks that operate similar to those used on bull-dozers or military-tanks.

By way of another example, a government entity may limit the area of operation of the first-automated-taxi 40, so transferring to the second-automated-taxi 44 which is presumable authorized to operate on the second-segment 46 is required.

In order to minimize the time the client 18 must wait at the transfer-point 48, the system 10 may specify the first-meet-time 50 of the first-automated-taxi 40 and the second-meet-time 54 of the second-automated-taxi 44 to differ by less than a minute. Preferably the second-automated-taxi 44 arrives at the transfer-point 48 before the first-automated-taxi 40 arrives. That is, preferable the second-meet-time 54 precedes the first-meet-time 50, but is no more than one minute after the first-meet-time 50.

It is also contemplated that the second-automated-taxi 44 may be transporting other clients to the transfer-point 48. To avoid unnecessary delay, the system 10 may adjust a pickup-time 62 that the first-automated-taxi 40 starts the first-segment 42 (i.e. picks up the client 18 at the origination 22) so first-meet-time 50 is different from the second-meet-time 54 by less than a minute. In other words, the system 10 schedules the pickup-time 62 so that there is minimal delay at the transfer-point 48

Accordingly, an automated vehicle transportation system (the system 10), a controller 28 for the system 10, and a method of operating the system 10 is provided. The system 10 is general intended for coordinating ground-travel of a few persons (e.g. one to three clients) when all persons (e.g. the client 18) have the same origination 22 and destination 24. However, it is recognized that the ground-transportation service could be extended to multiple locations of origination and destination, preferable without significant deviations from the route 32. It is envisioned that the route 32 will be customized to the needs of the client 18 or multiple clients. That is, the route 32 is not a predetermined-schedule which would require the client 18 to adjust his/her personal schedule to the predetermined-schedule. Rather, the route 32 is optimized for each instance of the transportation-request 16 from the client 18.

While this invention has been described in terms of the preferred embodiments thereof, it is not intended to be so limited, but rather only to the extent set forth in the claims that follow.

## Claims

1. An automated vehicle transportation system (10) for multiple-segment ground-transportation, said system (10) comprising:
a communications-network (12) used to send a transportation-request (16) from a client (18) to an automated-taxi-fleet (20), wherein the transportation-request (16) includes a destination (24);
a first-automated-taxi (40) that transports the client (18) along a first-segment (42) of a route (32) toward the destination (24); and
a second-automated-taxi (44) that transports the client (18) along a second-segment (46) of the route (32) to the destination (24), wherein the first-segment (42) ends and the second-segment (46) begins at a transfer-point (48), and the system (10) coordinates a first-meet-time (50) of the first-automated-taxi (40) and a second-meet-time (54) of the second-automated-taxi (44) at the transfer-point (48).

2. The system (10) in accordance with claim 1, wherein the route (32) to the destination (24) is **characterized by** a distance (56), and the distance (56) is greater than a range of the first-automated-taxi (40).

3. The system (10) according to any one of the preceding claims, wherein the second-segment (46) includes a terrain-type (60) that the first-automated-taxi (40) is not able to traverse.

4. The system (10) according to any one of the preceding claims, wherein the first-meet-time (50) of the first-automated-taxi (40) and the second-meet-time (54) of the second-automated-taxi (44) differ by less than a minute.

5. The system (10) in accordance with claim 4, wherein the system (10) adjusts a pickup-time (62) that the first-automated-taxi (40) starts the first-segment (42) so first-meet-time (50) is different from the second-meet-time (54) by less than a minute.
